# EUROPÄISCHE PATENTSCHRIFT

(11) **EP 2 804 731 B1**
(45) Veröffentlichungstag und Bekanntmachung des Hinweises auf die Patenterteilung: **18.10.2017**
(21) Anmeldenummer: 13701412.2
(22) Anmeldetag: 18.01.2013
(51) Int. Cl.: B29B 11/16, B29C 31/04

(54) **VERFAHREN UND VORRICHTUNG ZUR HERSTELLUNG EINES DREIDIMENSIONALEN VORFORMLINGS AUS EINEM FASERGELEGE IM ZUGE DER HERSTELLUNG VON FASERVERSTÄRKTEN FORMTEILEN**
METHOD AND DEVICE FOR PRODUCING A THREE-DIMENSIONAL PREFORM FROM A LAID SCRIM IN THE COURSE OF PRODUCTION OF FIBER REINFORCED MOLDED PARTS
PROCÉDÉ ET DISPOSITIF POUR PRODUIRE UNE PRÉFORME TRIDIMENSIONNELLE À PARTIR D'UNE STRUCTURE FIBREUSE LORS DE LA PRODUCTION DE PIÈCES MOULÉES RENFORCÉES PAR DES FIBRES

(30) Priorität: 18.01.2012 DE 102012200701
(43) Veröffentlichungstag der Anmeldung: 26.11.2014
(73) Patentinhaber: Dieffenbacher GmbH Maschinen- und Anlagenbau, 75031 Eppingen (DE)
(72) Erfinder: MAERTIENS, Steffen, 76646 Bruchsal (DE)
(86) Internationale Anmeldenummer: PCT/EP2013/050915
(87) Internationale Veröffentlichungsnummer: WO 2013/107851

(56) Entgegenhaltungen:
- DE-B1- 2 932 845
- US-A- 5 882 462
- RUDD C D ED - MIRACLE & S L DONALDSON D B: "Resin transfer molding and structural reaction injection molding", 1. Dezember 2001 (2001-12-01), ASM HANDBOOK / PREPARED UNDER THE DIRECTION OF THE ASM INTERNATIONAL HANDBOOK COMMITTEE, ASM INTERNATIONAL, MATERIALS PARK, OHIO ,USA, PAGE(S) 492 - 500, XP002676513, ISBN: 978-0-87170-703-1 Abbildung 1

## Beschreibung

Die Erfindung betrifft ein Verfahren zur Herstellung eines dreidimensionalen Vorformlings aus einem Fasergelege im Zuge der Herstellung von faserverstärkten Formteilen nach dem Oberbegriff des Anspruches 1 und eine Vorrichtung zur Herstellung eines dreidimensionalen Vorformlings aus einem Fasergelege im Zuge der Herstellung von faserverstärkten Formteilen nach dem Oberbegriff des Anspruches 9.

Im Zuge der Herstellung von faserverstärkten Kunststoffbauteilen, auch Faserverbundbauteile genannt, ist insbesondere als industrielle Verwendung das RTM-Verfahren, Resin-Transfer-Moulding-Verfahren, gängige Praxis. Der gesamte Herstellungsprozess bis zu einem verwendungsfähigen Kunststoffbauteilen besteht aus mehreren nachfolgend ablaufenden Einzelprozessen. In einem ersten Verfahrensschritt werden endkonturnahe Vorformlinge/Faserhalbzeuge hergestellt. In diesem Preform-Prozess werden in der Regel mehrere Lagen Gewebe oder Fasergelege, üblicherweise in zweidimensionaler Form, gestapelt oder ggf. gefügt (Nähen, Verschweißen, Kleben), so dass der Fasergewebestapel im Wesentlichen bereits die notwendigen äußeren Konturen und teilweise auch bereits besondere Schichten oder Schichtdicken aufweist. Vorzugsweise wird ein Binder in die Trennebenen der Gelege eingebracht, der nach Erreichen einer umgeformten dreidimensionalen Form und seiner Aktivierung und Aushärtung zu einer Fixierung der Schichten zueinander und der drapierten 3D-Kontur führt. Für den Preform-Prozess werden die Gewebestapel dann in ein Umformwerkzeug überführt und meist unter Druck durch Schließen des Umformwerkzeuges soweit der Kontur des späteren Formteiles angenähert und durch Aktivierung des Binders (Aufheizen und Abkühlen) ausgehärtet, das das Faserhalbzeug endkonturnah in ein Werkzeug einer Presse zur Durchführung des RTM-Verfahrens selbst eingelegt werden kann. Je nach Bedarf wird das Faserhalbzeug noch nachgeschnitten oder an vorgegebenen Stellen ausgestanzt, um eine noch präzisere Kontur zu erreichen. Nach dem Einlegen des Faserhalbzeugs in das Werkzeug werden die Werkzeughälften geschlossen und das notwendige Harz in die Kavität des Werkzeuges injiziert, wobei das Harz die Faserstruktur des Faserhalbzeuges imprägniert, die Fasern einschließt und fest in die Harzmatrix einbindet. Nach dem Aushärten des Harzes kann das faserverstärkte Kunststoffbauteil entformt werden. Neben dem RTM-Verfahren selbst, legt bereits die Herstellung eines Faserhalbzeuges den Grundstein für den Erfolg bei der Herstellung eines Kunststoffbauteiles. Es hat sich gezeigt, dass der Stand der Technik eine Vielzahl an Möglichkeiten zur Herstellung eines Vorformlings beschreibt, die sich aber in der Regel in manuellen oder automatisierten Herstellung eines möglichst ebenen Fasergewebestapels erschöpfen, das in einer Presse schließlich aus seiner 2D-Form in eine 3D-Form überführt wird. Dies kann in einem vorfixiertem (z. B. genäht) oder noch in einem flexiblen Zustand durchgeführt werden. Das Ziel ist es nach der Formgebung einen Vorformling zu erhalten, der eine ausreichende Eigensteifigkeit besitzt, um vollständig automatisiert und prozeßsicher in das Werkzeug einer RTM-Presse eingelegt werden zu können oder auch bis zur weiteren Verwendung transportiert und abgestapelt werden kann. Zur Herstellung, Umformung und Fixierung des Vorformlings gibt es eine Vielzahl an Möglichkeiten im einschlägigen Stand der Technik.

Das Dokument "Resin transfer molding and structural reaction injection molding", welches 2001 in dem ASM Handbuch (Seiten 492-500, ISB 978-0-87170-703-1) veröffentlicht wurde, offenbart das allgemeine Wissen über RTM.

Neben dem RTM-Verfahren selbst, legt bereits die Herstellung eines Faserhalbzeuges den Grundstein für den Erfolg der Herstellung eines Kunststoffbauteiles. Das Ziel ist es nach der Formgebung des Vorformlings aus einem biegeschlaffen Material einen Vorformling zu erhalten, der biegesteif genug ist um vollständig automatisiert und prozesssicher in das Werkzeug einer RTM-Presse eingelegt werden zu können oder auch bis zur weiteren Verwendung transportiert und abgestapelt werden kann. Zur Herstellung, Umformung und Fixierung des Vorformlings gibt es eine Vielzahl an Möglichkeiten im einschlägigen Stand der Technik.
Für die 3D-Umformung von mehrlagigen zweidimensionalen Zuschnitten aus Fasergeweben sind die folgenden Verfahrensschritte bekannt: Es werden Fasergewebe oder -gelege von einer Rolle abgewickelt und je nach Bedarf aus mehreren verschiedenen Geweben oder Gelegen, Formen und Größen zu einem Faserstapel zusammengelegt. Dabei kann es notwendig sein, die Außen- und ggf. Innenkontur entsprechend einem Schnittmuster des Vorformlings respektive des Kunststoffformteils zu bearbeiten oder zuzuschneiden. Das Schnittmuster wird dabei aus einer Abwicklung des Vorformlings, oder des Endbauteils erzeugt. Vorzugsweise wird dann der erstellte, im Wesentlichen ebene Faserstapel mittels einer Drapiervorrichtung drapiert, respektive in eine dreidimensionale Vorform umgeformt. Um aus einem biegeschlaffen Fasergewebe einen, im Wesentlichen biegesteifen Vorformling zu erhalten, ist es meist notwendig, dass zwischen die einzelnen Lagen ein Bindemittel eingebracht und anschließend ausgehärtet wird.

Es ist hierzu Stand der Technik, dass das Fasergewebe respektive der Faserstapel mittels geeigneter Heizvorrichtungen erhitzt und in eine relativ kühle oder kalte Drapierform eingelegt wird. Anschließend wird zügig die Drapierform geschlossen oder entsprechend drapiert um das Bindemittel auszuhärten. Es hat sich nun gezeigt, dass insbesondere bei komplexen Geometrien oder großflächigen Fasergelegen es zu Vorerstarrungen des Bindemittels im Fasergelege kommen kann, wenn dies partiell einen guten Wärmeübergang zur Auskühlung erhält. Ein Schließen der Form sorgt nun für Probleme beim Umformen, da steife oder ausgehärtete Bereiche als Bremsen dienen und so ungewollten Stress auf die einzelnen Schichten des Fasergeleges. Es kommt zu Verschiebungen, Knitterfalten oder ähnlichen Problemen im sorgfältigen Aufbau des Fasergeleges, was die Konsistenz und die Werthaltigkeit des späteren Bauteils gefährdet. Um dies zu vermeiden wird in der Regel deutlich über die Schmelz- oder Aktivierungstemperatur des Bindemittels erhitzt, was zum einen zu ungewollten Verzügen im Fasergelege führen kann und auch einen unnötigen Energieverbrauch mit sich bringt. Auch lässt sich ein stark aufgeheiztes Fasergelege nicht mehr so gut manipulieren.

Die Aufgabe der Erfindung besteht darin, ein Verfahren und eine Vorrichtung zu schaffen, bei dem trotz einer zügigen Umformung, insbesondere von großflächigen und/oder komplexen Geometrien, eine hochwertige Umformung des Vorformlings sichergestellt werden kann.

Die Lösung der Aufgabe für das Verfahren besteht dabei darin, dass als Transportvorrichtung zumindest ein erstes und ein zweites Tablett verwendet wird, wobei das erste Tablett das Fasergelege zur Fixierung mittels eines Fixierstempels und/oder eines Drapierstempels freigibt und anschließend das zweite Tablett durch eine Bewegung aus der Drapiervorrichtung heraus sukzessive das Fasergelege in die Drapierform ablegt.

Hierzu müssen Mittel (Stellvorrichtungen, Antriebe oder dergleichen) angeordnet sein, die es erlauben das erster Tablett gegenüber dem zweiten Tablett unabhängig zu bewegen, obwohl beide Tabletts zusammen die Transportvorrichtung für das Fasergelege in die Drapiervorrichtung ergeben. Beispielsweise kann das erste Tablett an das zweite Tablett angeklappt oder in und/oder unter das erste Tablett verfahren werden. Insbesondere ist vorgesehen, dass bei einer sehr komplexen Geometrie für eine optimale Drapierung in die Drapierform die Transportvorrichtung aus einer Vielzahl von Tabletts besteht, die unabhängig voneinander aus der Drapierform herausgefahren werden können. Reicht dies für die Drapierung nicht aus so können die freigewordenen Bereiche des Fasergeleges, die nicht mehr unterstützt werden von den Drapierstempeln sukzessive drapiert werden.

Vorzugsweise kann das Fasergelege auf zumindest einem Tablett aufgeheizt werden. Dazu ist vorzugsweise eine Temperierungsvorrichtung an oder wirkverbunden mit dem Tablett angeordnet. Vorzugsweise wird dabei die Temperatur eines bereits temperierten Fasergeleges auf der Transportvorrichtung respektive auf dem Tablett auf eine vorgegebene Mindesttemperatur eingestellt und/oder gehalten. Dabei sollte die Mindesttemperatur im Wesentlichen dem Schmelzpunkt des Bindemittels innerhalb des Fasergeleges entsprechen.

Es kann sinnvoll sein durch die Drapierstempel oder die Fixierstempel und dem noch das Fasergelege tragenden Tabletts das Fasergelege unter Spannung zu halten. Insbesondere kann zur Etablierung der Spannung eine Rückhaltevorrichtung an oder wirkverbunden mit dem Tablett verwendet werden. Insgesamt ist es bei komplexen Geometrien des Vorformlings respektive der Drapierform auch denkbare als Transportvorrichtung (21) eine Kombination aus einem oder mehreren Bandtabletts und einem oder mehreren Tabletts zu verwenden.

Die Lösung der Aufgabe für eine Vorrichtung besteht darin, dass als Transportvorrichtung zumindest ein erstes und ein zweites Tablett angeordnet ist, wobei an dem ersten Tablett zur Freigabe des Fasergeleges zur Fixierung mittels eines Fixierstempels und/oder eines Drapierstempels Mittel zur unabhängigen Bewegung gegenüber dem zweiten Tablett angeordnet sind.

Die Vorrichtung ist insbesondere zur Durchführung des Verfahrens geeignet, kann aber auch eigenständig betrieben werden. In vorteilhafter Weise ist es nun möglich.

Weitere vorteilhafte Maßnahmen und Ausgestaltungen des Gegenstandes der Erfindung gehen aus den Unteransprüchen und der folgenden Beschreibung mit der Zeichnung hervor.
Die in der Figurenbeschreibung dargestellten Kombinationsmöglichkeiten sind alle für sich alleine und eigenständig und in jeglicher Kombination verwertbar. Insbesondere sind einzelne Sätze auch als eigenständige Merkmale zu bewerten.

Es zeigen:
- Figur 1: eine Anlage zur Herstellung von faserverstärkten Formteilen in einer Presse unter Verwendung von vorgeformten Vorformlingen als großindustrielle Anwendung in einer schematischen Seitenansicht,
- Figur 2: bis 7 ein geteiltes Tablett als Transportvorrichtung für das Fasergelege in einer Drapiervorrichtung mit Darstellung einer möglichen schrittweisen oder kontinuierlichen Ablage des Fasergeleges in die Drapierform und mit
- Figur 8: bis 13 die Verwendung ein Bandtablett als Transportvorrichtung nach dem Beispiel der Figuren 2 bis 7.

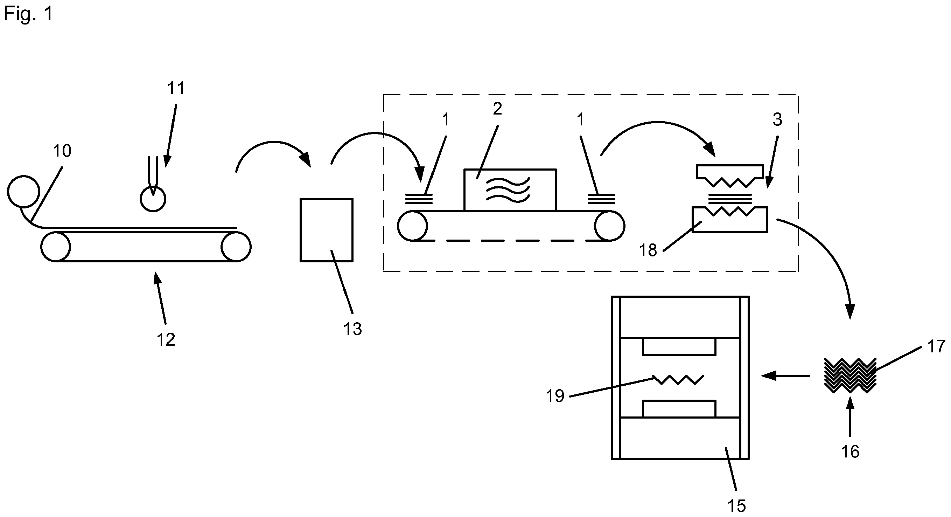

Figur 1 zeigt eine Anlage zur Herstellung von faserverstärkten Formteilen 19 in einer RTM-Presse 15 unter Verwendung von vorgeformten Vorformlingen 17 als großindustrielle Anwendung in einer schematischen Seitenansicht. Zur Herstellung der Vorformlinge 17 werden zunächst eine oder mehrere verschiedene Fasermatten 10, vorzugsweise als Rollenware, bereitgestellt und auf einer Schneidvorrichtung 12 mit einer Schneidvorrichtung 11 zu einzelnen Fasermattenzuschnitten (nicht dargestellt) geschnitten. Die Kontur der Fasermattenzuschnitte kann im Wesentlichen mit der Kontur des Vorformlings 17 oder des Formteils 19 übereinstimmen, aber es können auch vorgegebene Teilgeometrien davon hergestellt werden. Die Fasermattenzuschnitte werden dann mittels einer geeigneten Transportvorrichtung (die in Figur 1 durch gebogene Richtungspfeile dargestellt sind) durch eine Leimauftragsvorrichtung 13 verfahren und dort mit Bindemittel versehen, bevor sie zu einem Fasergelege 1 zusammengefügt werden. Je nach Anlage wird anschließend das fertig erstellte Fasergelege 1 durch eine Heizvorrichtung 2 temperiert und vorzugsweise auf eine Temperatur angehoben, die zumindest der Schmelztemperatur des Bindemittels entspricht. Anschließend wird das Fasergelege 1 in eine Drapiervorrichtung 3 verbracht und dort mittels geeigneter Mittel entlang der Kontur der Drapierform 18 umgeformt. Durch die Drapierform 18 der Drapiervorrichtung 3 erfährt das Fasergelege 1 eine Abkühlung und erstarrt zu einem Vorformling 16, der meist problemlos auf einem Stapel 17 zwischengestapelt werden kann, bevor er in einer RTM-Presse 15 zu einem verstärkten Formteil 19 verpresst wird.

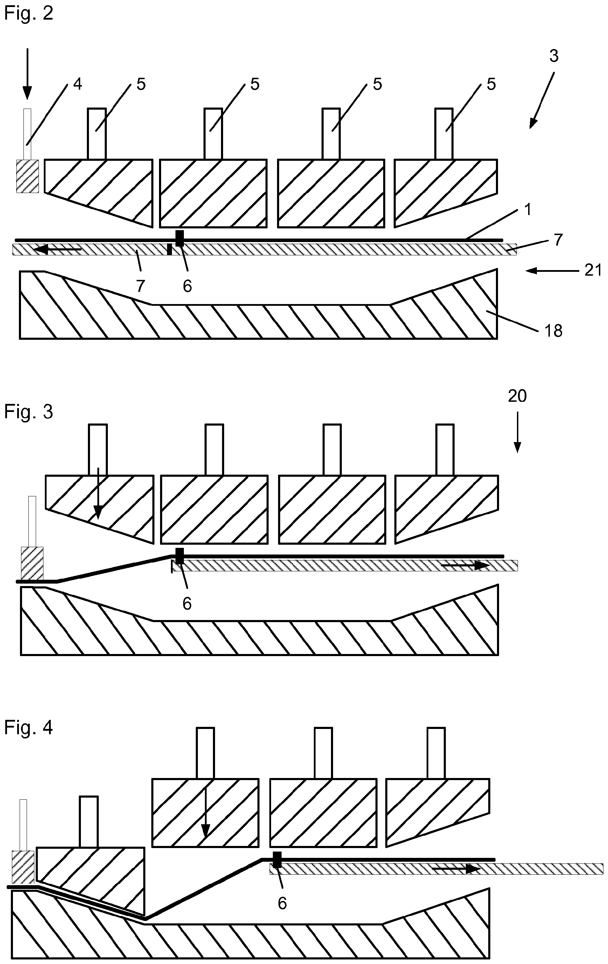

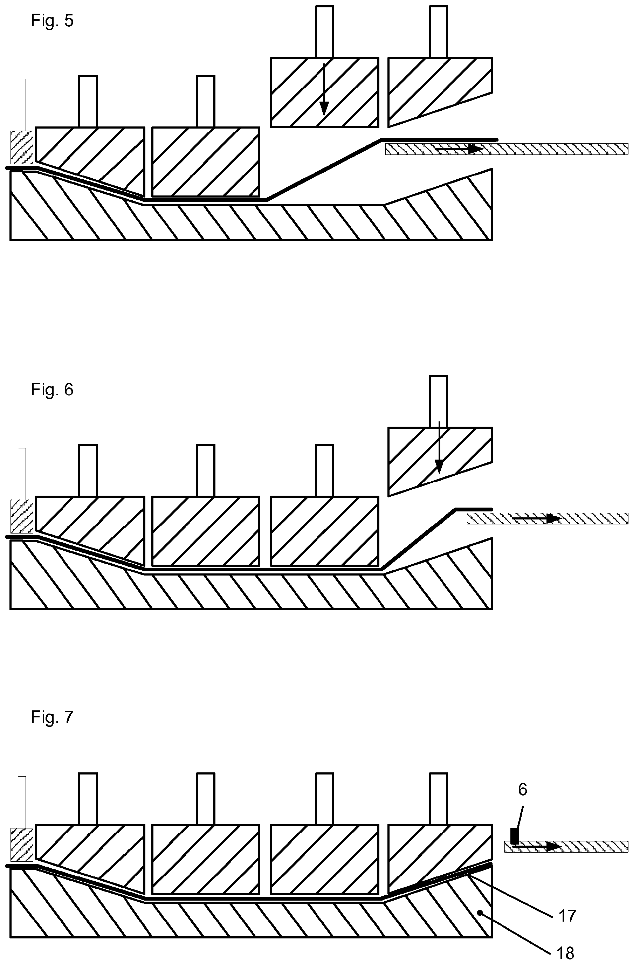

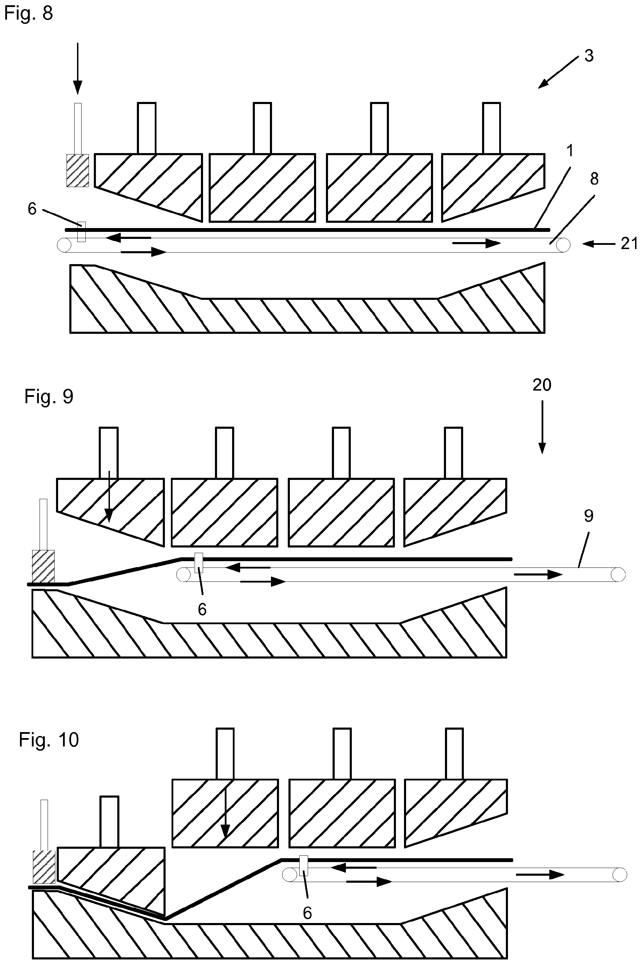

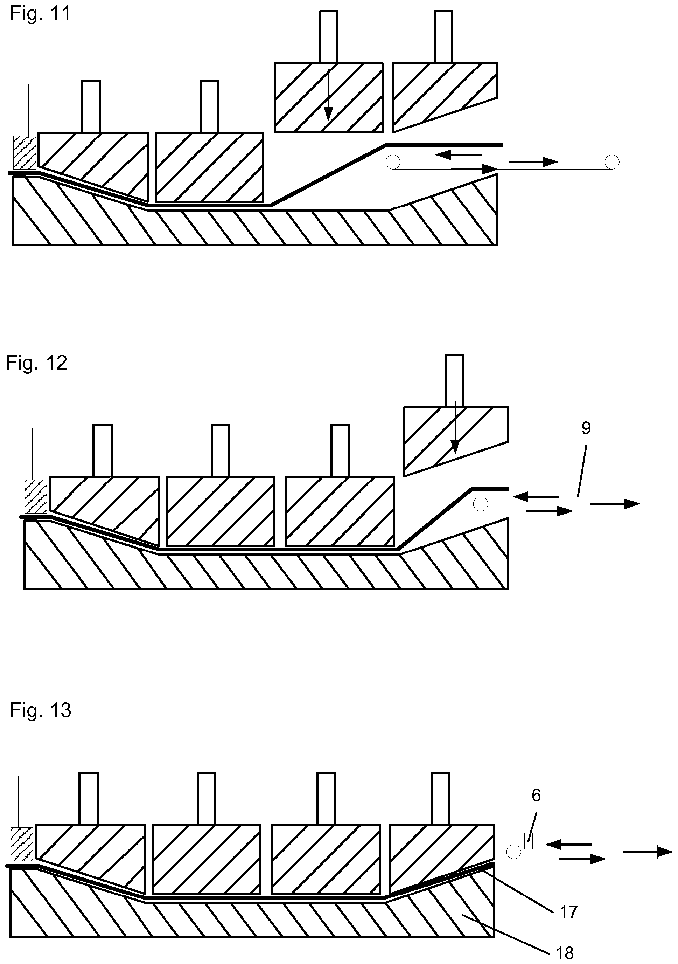

In den Figuren 2 bis 7 wird dabei eine mögliche Transportvorrichtung 21 beschrieben, die hier als zweigeteiltes Tablett 7 ausgeführt ist. Aus Gründen der Übersichtlichkeit wurde auf eine spezielle Darstellung der optionalen Temperierungsvorrichtung verzichtet. Wird nun ein Fasergelege 1 vorgewärmt oder kalt auf der Transportvorrichtung 21 abgelegt, kann die Transportvorrichtung das Fasergelege 1 mit der Temperierungsvorrichtung, die beispielsweise in dem Tablett 7 oder auch mitfahrend oberhalb des Tabletts 7 angeordnet ist, aufheizen oder dessen bereits vorhandene Temperatur zumindest über dem Schmelzpunkt des Bindemittels halten. Ist nun die Transportvorrichtung 21 in die Drapiervorrichtung 3 eingefahren, kann bei einem zweigeteilten Tablett 7 der erste Teil des Tabletts außer Eingriff mit einem Teil des Fasergeleges 1 verfahren werden. Es sind dabei verschiedene Möglichkeiten denkbar, wie einklappen, einfahren oder dergleichen in den zweiten Teil des Tabletts 7 selbst oder auch gezieltes Ausfahren des ersten Teils des Tabletts 7 aus der Drapiervorrichtung 3 heraus. Es ist dabei möglich, dass die notwendige Anzahl der Teile des Tabletts 7 ein Mehrfaches ist und das zumindest eines dieser Teile, vorzugsweise alle, die Möglichkeit zur Temperierung besitzen bzw. eine Temperierungsvorrichtung enthalten. Vorzugsweise, aber nicht unbedingt notwendig, kann ein erster Fixierstempel 4 oder ein Drapierstempel 5 den freigewordenen Bereich des Fasergeleges 1 an der Drapierform 18 entsprechend fixieren und dabei ggfs. auch umformen. Je nach Reibungswiderstand der einzelnen Maschinenelemente kann nun der zweite Teil des Tabletts 7 beginnen aus der Drapiervorrichtung 3 zu verfahren, nach Bedarf schrittweise oder kontinuierlich. Wie in den Figuren 3 bis 7 dargestellt, werden die nun in Drapierrichtung 20 einfahrenden Drapierstempel 5 entsprechend der "frei" gewordenen Bereiche (die nicht mehr auf der Transportvorrichtung aufliegenden Bereiche) des Fasergeleges 1 das Fasergelege entsprechend der Kontur der Drapierform 18 umformen. Im vorliegenden Beispiel geschieht dies durch das abfolgende Verfahren von vier Drapierstempeln 5 in Drapierrichtung 20. Somit ist es nun möglich in allen Bereichen der Drapierform 18 ein gleichmäßig vorgeheiztes respektive temperiertes Fasergelege 1 zu einem Vorformling 17 umzuformen. In den Figuren 8 bis 13 ist anstelle eines Tabletts 7 als Transportvorrichtung 21 ein Bandtablett 8 angeordnet. Das Bandtablett sollte gemäß der Erfindung zweigeteilt sein; ihm kann aber auch ein das Fasergelege 1 stützende Element oder ein Tablett 7 beigeordnet sein, das die Lehre der Erfindung verwirklicht. Auch hier ist die Temperiervorrichtung nicht dargestellt, kann aber wirksam vorhanden sein, um das auf dem Bandtablett 8 aufliegende Fasergelege 1 entsprechend in seiner Temperatur einzustellen oder zu halten. Durch das rollende Band 9 des Bandtabletts 8 und einer gleichzeitigen Relativbewegung des Bandtabletts 8 kann das Fasergelege 1 schonend in die Drapierform 18 abgelegt werden. Die Fixierung des ersten Teils des Fasergeleges mittels einem Fixierstempel 4 kann vorsichtshalber, insbesondere bei komplexen Geometrien vorgesehen sein, aber ist bei einfachen Geometrien der Drapierform 18 nicht notwendig.

Anstelle der Drapierstempel 5 kann es auch denkbar sein andere geeignete Mittel zur Drapierung vorzusehen.

Die Temperierungsvorrichtung kann als Konvektionsstrahler ausgeführt sein oder auch als (Widerstands-)Heizvorrichtung für die Transportvorrichtung 21. Bevorzugt wird das beschriebene Tablett 7 auf eine entsprechende Temperatur aufgeheizt, die ausreicht um mittels der von dem Tablett 7 abstrahlenden Strahlungswärme das Fasergelege entsprechend aufzuheizen oder dessen eventuell ausreichende Temperatur zumindest über den Schmelzpunkt des Bindemittels zu halten.

Je nach Anwendungsfall kann die Transportvorrichtung 21 mehrfach unterteilt sein durch einzelnes Ausfahren oder einer Kombination der beschriebenen Möglichkeiten das Fasergelege entsprechend der Vorgaben ablegen. Insbesondere kann es denkbar sein, dass zum Beispiel in der Mitte oder in einem Randbereich oder an zwei oder mehr Punkten gleichzeitig mit der Ablage des Fasergeleges 1 gestartet werden muss. Dennoch bleibt auch beispielsweise bei langwierigen Drapierprozessen das noch nicht drapierte und auf die Drapierform 18 abgelegte Fasergelege auf eine ausreichende Temperatur erwärmt. (1432)

### Bezugszeichenliste: DP 1432

- 1.: Fasergelege
- 2.: Heizvorrichtung
- 3.: Drapiervorrichtung
- 4.: Fixierstempel
- 5.: Drapierstempel
- 6.: Rückhaltevorrichtung
- 7.: Tablett
- 8.: Bandtablett
- 9.: Band
- 10.: Fasermatte
- 11.: Schneidvorrichtung
- 12.: Schneidtisch
- 13.: Leimauftragsvorrichtung
- 14.: Vorformling
- 15.: RTM-Presse
- 16.: Stapel
- 17.: Vorformling
- 18.: Drapierform
- 19.: Formteilen
- 20.: Drapierrichtung
- 21.: Transportvorrichtung

## Patentansprüche

1. Verfahren zur Herstellung eines dreidimensionalen Vorformlings (19) aus einem Fasergelege (1) im Zuge der Herstellung von faserverstärkten Formteilen, mit einer Drapiervorrichtung (3) und einer Transportvorrichtung (21) für das Fasergelege (1), wobei die Drapiervorrichtung (3) zumindest eine Drapierform (18) für ein Fasergelege (1) und zur Drapierform (18) verfahrbare Mittel zur Umformung des Fasergeleges (1) entsprechend der Kontur der Drapierform (18) umfasst, **dadurch gekennzeichnet,** das sals Transportvorrichtung (21) zumindest ein erstes und ein zweites Tablett (7) verwendet wird, wobei das erste Tablett (7) das Fasergelege (1) zur Fixierung mittels eines Fixierstempels (4) und/oder eines Drapierstempels (5) freigibt und anschließend das zweite Tablett (7) durch eine Bewegung aus der Drapiervorrichtung (3) heraus sukzessive das Fasergelege (1) in die Drapierform (18) ablegt.

2. Verfahren nach Anspruch **dadurch gekennzeichnet, dass** das Fasergelege (1) auf dem Tablett (7) aufgeheizt wird.

3. Verfahren nach Anspruch 2, **dadurch gekennzeichnet, dass** die Temperatur eines bereits temperierten Fasergeleges (1) auf dem Tablett (7) auf eine vorgegebene Mindesttemperatur eingestellt und/oder gehalten wird.

4. Verfahren nach Anspruch 2 oder 3, **dadurch gekennzeichnet, dass** die Mindesttemperatur im Wesentlichen dem Schmelzpunkt des Bindemittels innerhalb des Fasergeleges (1) entspricht.

5. Verfahren nach einem oder mehreren der vorhergehenden Ansprüche, **dadurch gekennzeichnet, dass** die Drapierstempel (5) die von dem zweiten Tablett (7) freigegebenen Bereiche des Fasergeleges (1) sukzessive in die Drapierform (18) drapieren.

6. Verfahren nach einem oder mehreren der vorhergehenden Ansprüche, **dadurch gekennzeichnet, dass** durch die Drapierstempel (5) oder die Fixierstempel (4) und dem Tablett (7) das Fasergelege (1) unter Spannung gehalten wird.

7. Verfahren **nach Anspruch 6, dadurch gekennzeichnet, dass** zur Etablierung der Spannung eine Rückhaltevorrichtung (6) verwendet wird.

8. Verfahren nach einem oder mehreren der vorhergehenden Ansprüche, **dadurch gekennzeichnet, dass** als Transportvorrichtung (21) eine Kombination aus einem oder mehreren Bandtabletts (8) und einem oder mehreren Tabletts (7) verwendet wird.

9. Vorrichtung zur Herstellung eines dreidimensionalen Vorformlings (19) aus einem Fasergelege (1) im Zuge der Herstellung von faserverstärkten Formteilen, umfassend eine Drapiervorrichtung (3) und einer Transportvorrichtung (21) für das Fasergelege (1), wobei die Drapiervorrichtung (3) zumindest eine Drapierform (18) für ein Fasergelege (1) und zur Drapierform (18) verfahrbare Mittel zur Umformung des Fasergeleges (1) entsprechend der Kontur der Drapierform (18) umfasst, **dadurch gekennzeichnet, dass** als Transportvorrichtung (21) zumindest ein erstes und ein zweites Tablett (7) angeordnet ist, wobei an dem ersten Tablett (7) zur Freigabe des Fasergeleges (1) zur Fixierung mittels eines Fixierstempels (4) und/oder eines Drapierstempels (5) Mittel zur unabhängigen Bewegung gegenüber dem zweiten Tablett (7) angeordnet sind.

10. Vorrichtung nach Anspruch 9, **dadurch gekennzeichnet, dass** an zumindest einem Tablett (7) eine Temperierungsvorrichtung zumindest zur Temperaturerhaltung eines vorgewärmten Fasergeleges (1) und/oder zur Aufheizung des Fasergeleges (1) über den Schmelzpunkt des Bindemittels innerhalb des Fasergeleges (1) angeordnet ist.

11. Vorrichtung nach den Ansprüchen 9 oder 10, **dadurch gekennzeichnet, dass** als Transportvorrichtung (21) zumindest ein zweiteiliges Tablett (7) und ein Bandtablett (8) angeordnet ist.

12. Vorrichtung nach einem oder mehreren der Ansprüche 9 bis 11, **dadurch gekennzeichnet, dass** zum Einbringen einer Spannung in das Fasergelege (1) dem zweiten Tablett (8) eine Rückhaltevorrichtung (6) für das Fasergelege (1) zu- oder daran angeordnet ist.

## Claims

1. A method for producing a three-dimensional preform (19) from a laid scrim (1) in the course of production of fibre-reinforced moulded parts, comprising a draping apparatus (3) and a transport apparatus (21) for the laid scrim (1), wherein the draping apparatus (3) comprises at least one draping mould (18) for a laid scrim (3), and means displaceable to the draping mould (18) for forming the laid scrim (3) according to the contour of the draping mould (18), **characterized in that** at least one first and one second tray (7) is used as a transport apparatus (21), wherein the first tray (7) releases the laid scrim (3) for fixing by means of a fixing stamp (4) and/or a draping stamp (5), and subsequently the second tray (7) gradually places the laid scrim (1) in the draping mould (18) by a movement out of the draping apparatus (3).

2. A method according to claim 1, **characterized in that** the laid scrim (1) is heated on the tray (7).

3. A method according to claim 2, **characterized in that** the temperature of an already tempered laid scrim (1) is set to and/or held at a predetermined minimum temperature on the tray (7).

4. A method according to claim 2 or 3, **characterized in that** the minimum temperature substantially corresponds to the melting point of the binder within the laid scrim (1).

5. A method according to one or several of the preceding claims, **characterized in that** the draping stamps (5) gradually drape the regions of the laid scrim (1) which are released by the second tray (7) into the draping mould (18).

6. A method according to one or several of the preceding claims, **characterized in that** the laid scrim (1) is held under tension by the draping stamp (5) or the fixing stamp (4) and the tray (7).

7. A method according to claim 6, **characterized in that** a retaining apparatus (6) is used for establishing the tension.

8. A method according to one or several of the preceding claims, **characterized in that** a combination of one or several belt trays (8) and one or several trays (7) is used as a transport apparatus (21).

9. An apparatus for producing a three-dimensional preform (19) from a laid scrim (1) in the course of production of fibre-reinforced moulded parts, comprising a draping apparatus (3) and a transport apparatus (21) for the laid scrim (1), wherein the draping apparatus (3) at least comprises one draping mould (18) for a laid scrim (3), and means displaceable to the draping mould (18) for forming the laid scrim (3) according to the contour of the draping mould (18), **characterized in that** at least one first and one second tray (7) is arranged as a transport apparatus (21), wherein means for the independent movement in relation to the second tray (7) are arranged on the first tray (7) for releasing the laid scrim (3) for fixing by means of a fixing stamp (4) and/or a draping stamp (5).

10. An apparatus according to claim 9, **characterized in that** a tempering apparatus is arranged on at least one tray (7) at least for maintaining the temperature of a preheated laid scrim (1) and/or for heating the laid scrim (1) over the melting point of the binder within the laid scrim (1).

11. An apparatus according to the claims 9 or 10, **characterized in that** at least one two-part tray (7) and a belt tray (8) are arranged as a transport apparatus (21).

12. An apparatus according to one or several of the claims 9 to 11, **characterized in that** for introducing a tension into the laid scrim (1) a retaining apparatus (6) for the laid scrim (1) is associated with the second tray (8) or arranged thereon.

## Revendications

1. Procédé pour la fabrication d'une ébauche (19) à trois dimensions à partir d'une couche de fibres (1) au cours de la fabrication de pièces mises en forme armées de fibres, avec un dispositif de drapage (3) et un dispositif de transport (21) pour la couche de fibres (1), dans lequel le dispositif de drapage (3) comprend au moins un moule de drapage (18) pour une couche de fibres (1) et des moyens pouvant être déplacés vers le moule de drapage (18) pour déformer la couche de fibres (1) suivant le contour du moule de drapage (18), **caractérisé en ce que** le dispositif de transport (21) utilisé comprend au moins une première et une deuxième tablette (7), la première tablette (7) libérant la couche de fibres (1) en vue de sa fixation au moyen d'un poinçon de fixation (4) et/ou d'un poinçon de drapage (5) et la deuxième tablette (7) déposant ensuite successivement, par un mouvement à partir du dispositif de drapage (3), la couche de fibres (1) dans le moule de drapage (18).

2. Procédé selon la revendication 1, **caractérisé en ce que** la couche de fibres (1) est chauffée sur la tablette (7).

3. Procédé selon la revendication 2, **caractérisé en ce que** la température d'une couche de fibres (1) déjà amenée à température sur la tablette (7) est réglée et/ou maintenue à une température minimale prédéterminée.

4. Procédé selon la revendication 2 ou 3, **caractérisé en ce que** la température minimale correspond sensiblement au point de fusion du liant contenu dans la couche de fibres (1).

5. Procédé selon une ou plusieurs des revendications précédentes, **caractérisé en ce que** les poinçons de drapage (5) drapent successivement les zones de la couche de fibres (1) libérées par la deuxième tablette (7) dans le moule de drapage (18).

6. Procédé selon une ou plusieurs des revendications précédentes, **caractérisé en ce que** le poinçon de drapage (5) ou le poinçon de fixation (4) et la tablette (7) maintiennent la couche de fibres (1) sous tension.

7. Procédé selon la revendication 6, **caractérisé en ce qu'**un dispositif de rétention (6) est utilisé pour établir la tension.

8. Procédé selon une ou plusieurs des revendications précédentes, **caractérisé en ce que** le dispositif de transport (21) utilisé est une combinaison d'une ou plusieurs tablettes sur bande (8) et d'une ou plusieurs tablettes (7).

9. Dispositif pour la fabrication d'une ébauche (19) à trois dimensions à partir d'une couche de fibres (1) au cours de la fabrication de pièces mises en forme armées de fibres, avec un dispositif de drapage (3) et un dispositif de transport (21) pour la couche de fibres (1), dans lequel le dispositif de drapage (3) comprend au moins un moule de drapage (18) pour une couche de fibres (1) et des moyens pouvant être déplacés vers le moule de drapage (18) pour déformer la couche de fibres (1) suivant le contour du moule de drapage (18),
**caractérisé en ce que** le dispositif de transport (21) utilisé comporte au moins une première et une deuxième tablette (7), des moyens étant prévus sur la première tablette (7) pour libérer la couche de fibres (1) en vue de sa fixation au moyen d'un poinçon de fixation (4) et/ou d'un poinçon de drapage (5) en vue de son déplacement indépendant par rapport à la deuxième tablette (7).

10. Dispositif selon la revendication 9, **caractérisé en ce qu'**un dispositif de réglage de la température est disposé sur l'au moins une tablette (7) pour maintenir à température une couche de fibres (1) préchauffée et/ou pour chauffer la couche de fibres (1) au-dessus du point de fusion du liant contenu dans la couche de fibres (1).

11. Dispositif selon l'une des revendications 9 ou 10, **caractérisé en ce que** le dispositif de transport (21) comprend au moins une tablette en deux parties (7) et une tablette sur bande (8).

12. Dispositif selon une ou plusieurs des revendications 9 à 11, **caractérisé en ce qu'**un dispositif de rétention (6) de la couche de fibres (1) est disposée au niveau ou sur la deuxième tablette (8) pour introduire une tension dans la couche de fibres (1).
